# EUROPÄISCHE PATENTSCHRIFT

(11) **EP 2 243 977 B1**
(45) Veröffentlichungstag und Bekanntmachung des Hinweises auf die Patenterteilung: **26.09.2012**
(21) Anmeldenummer: 10160258.9
(22) Anmeldetag: 19.04.2010
(51) Int. Cl.: F16F 9/04

(54) **Luftfeder-Dämpfer**
Pneumatic spring damper
Amortisseur à ressort pneumatique

(30) Priorität: 24.04.2009 DE 102009002617
(43) Veröffentlichungstag der Anmeldung: 27.10.2010
(73) Patentinhaber: ZF Friedrichshafen AG, 88038 Friedrichshafen (DE)
(72) Erfinder: Sonnenburg, Reinhard, Dr., 97705 Burkardroth (DE); Pradel, Robert, 97520 Röthlein (DE)

(56) Entgegenhaltungen:
- DE-A1- 19 720 776
- GB-A- 1 231 766
- US-A1- 2008 284 072

## Beschreibung

Die Erfindung betrifft einen Luftfeder-Dämpfer gemäß dem Oberbegriff von Patentanspruch 1.

Aus der DE 199 40 198 C1 ist der typische Aufbau einer Fahrzeugfeder-Dämpfung bekannt, bei der eine Luftfeder und funktional parallel dazu ein Schwingungsdämpfer verwendet werden. Der Aufbau einer Luftfeder ist detaillierter aus der DE 41 08 711 Au bekannt. Für eine lastabhängige Dämpfung wird ein Zusatzvolumen zur Luftfeder verwendet, das über Drosseln mit dem Luftvolumen in der Luftfeder verbunden ist. Die Drosseln werden in Abhängigkeit einer Reglereinheit verstellt. Auch der Schwingungsdämpfer kann über den Regler angesteuert werden. Eine derartige Fahrzeugfeder-Dämpfung kann nur bei einer Neukonstruktion eines Fahrzeugs Eingang finden, da das Zusatzvolumen und der Regler im Fahrzeug plaziert werden müssen.

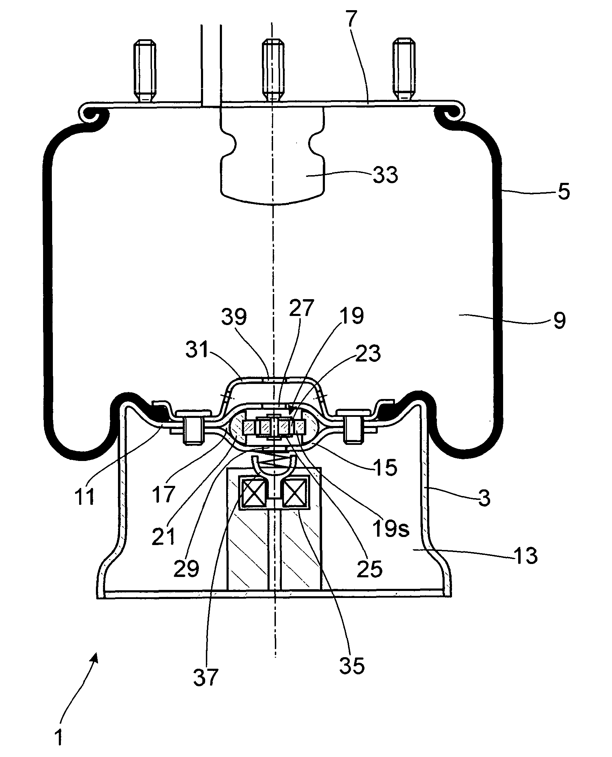

Die Fig. 2 der DE 199 40 198 C1 beschreibt eine Luftfeder-Dämpfer-Einheit, die Platz sparend ist, jedoch ebenfalls eine Anpassung der Anbindungsstellen erfordert. Im Reparaturfall oder bei einer Generalüberholung eines Fahrzeugs kann nicht eine einfache verschlissene Luftfeder gegen eine derartige Luftfeder-Dämpfer-Einheit ausgetauscht werden.

Die Aufgabe der vorliegenden Erfindung besteht darin, eine nachrüstbare Luftfeder-Dämpfereinheit zu schaffen.

Die GB 1 231 766 A beschreibt eine gattungsbildende Luftfeder mit einem Dämptventil in einer Zwischenscheibe. An der Zwischenscheibe ist eine Hülse mit einem Tragboden angeschweißt, wobei der Tragboden einen Fixierbolzen trägt.

Des Weiteren ist aus der US 2008/0284072 A1 eine Luftfeder bekannt, die in einer Zwischenscheibe eines Abrollkörpers ein Dämpfventil in der Bauform eines porösen Körpers aufweist. Der poröse Körper ist in einem hülsenförmigen Gehäuse fixiert.

Erfindungsgemäß wird die Aufgabe durch die Merkmale des Patentanspruchs 1 gelöst.

Wesentlich ist, dass die Luftfeder mit der zusätzlichen Dämpffunktion genau den äußeren Bauraum benötigt, wie eine an sich bekannte Luftfeder ohne Dämpffunktion, so dass die Nachrüstung oder Umrüstung problemlos vorgenommen werden kann.

Der Dämpfventilkörper kann von einer Scheibe gebildet werden, die an ihrer Ober- und Unterseite zum Hohlraum innerhalb der Zwischenscheibe abgedichtet ist. Die Scheibe kann sintertechnisch, aber bevorzugt auch durch einen Stanz-Präge-Vorgang hergestellt werden.

Für eine möglichst einfache Abdichtung des Dämpfventilkörpers ist die Scheibe von einem u-förmigen Dichtungsring eingefasst.

Optional kann ein Luftübertritt zwischen dem vom Rollbalg gebildeten Federraum und einem vom Abrollrohr bestimmten Zusatzraum von einem Aktuator willkürlich beeinflusst werden.

Der Aktuator lässt sich Platz sparend im Zusatzraum anordnen ist. Der Aktuator bildet mit seinem Ventilkörper und mit dem Luftübertritt ein verstellbares Ventil.

Die Haltescheibe bildet mit dem Ventilkörper des Aktuators das verstellbare Ventil, das als ein Sitzventil ausgeführt ist.

Die Zwischenscheibe weist eine zusätzliche Deckscheibe auf, die mit einem Anschlagpuffer im Federraum zusammenwirkt, so dass eine zusätzliche lastabhängige Federkraft zur Verfügung steht.

Des Weiteren ist vorgesehen, dass mittels der Deckscheibe der Rollbalg mit dem Abrollkörper verspannt wird. Insgesamt ergibt sich dadurch eine einfache und kompakte Konstruktion.

Anhand der folgenden Figurenbeschreibung soll die Erfindung näher erläutert werden.

Die einzige Figur zeigt eine Luftfeder 1 mit Dämpfungsfunktion. Die Luftfeder 1 umfasst ein Abrollrohr 3, das z. B. mit einer Fahrzeugachse verbunden ist. Ein erstes Ende eines Rollbalgs 5 ist am Abrollrohr 3 befestigt. Sein zweites Ende ist über einen umgebördelten Rand mit einem Deckel 7 verbunden, so dass ein Federraum 9 begrenzt wird.

Das Abrollrohr 3 verfügt über einen Boden, der als eine Zwischenscheibe 11 den Federraum 9 von einem Zusatzraum 13 innerhalb des Abrollrohrs 3 trennt. Die Zwischenscheibe 11 verfügt über eine Haltescheibe 15, die zusammen einen Hohlraum bestimmen. Innerhalb dieses Hohlraums 17 ist ein Dämpfventil 19 angeordnet, das von der Zwischenscheibe 11 und der Haltescheibe 15 fixiert wird. Das Dämpfventil 19 umfasst eine Scheibe 19s, die an seiner Ober- und Unterseite zum Hohlraum 17 abgedichtet ist. Dafür wird die Scheibe 19s von einem u-förmigen Dichtungsring 21 eingefasst.

Die Scheibe 19s verfügt über Durchströmungskanäle 23, deren Austrittsöffnungen zumindest teilweise von mindestens einer Ventilscheibe 25 abgedeckt werden. Sowohl die Zwischenscheibe 11 wie auch die Haltescheibe 15 verfügen über mindestens einen Luftübertritt 27; 29 zum Hohlraum 17.

Eine Deckscheibe 31, die mit der Zwischenscheibe 11 flächig verbunden ist, dient einerseits als Spannmittel das erste Ende des Rollbalgs 5 und wirkt andererseits mit einem Anschlagpuffer 33 am Deckel 7 im Federraum 9 zusammen, wobei die Deckscheibe 31 das Dämpfventil 19 gegen eine Belastung durch den Anschlagpuffer 33 schützt.

In dem Zusatzraum 13 des Abrollrohrs 3 ist ein Aktuator 35 angeordnet, dessen Ventilkörper 37 mit dem Luftübertritt 29 im Halteblech 15 ein verstellbares Sitzventil bildet. Die Energieversorgung des Aktuators 35 kann problemlos über das Abrollrohr 3 erfolgen.

Bei einer geringen Belastung übernehmen die Ventilscheiben 25 am Dämpfventilkörper 19s die Dämpffunktion, so dass ein sicheres Fahrverhalten erreicht wird. Reicht die dabei erzielbare Dämpfkraft nicht aus, dann kann über den Aktuator 35 in Verbindung mit dem Ventilkörper 37 eine Dämpfkraftsteigerung erreicht werden, indem der Luftübertritt 29 zwischen dem Zusatzraum 13 und dem Federraum 9 vom Ventilkörper 37 zunehmend verschlossen wird. Das Dämpfventil 19 und das verstellbare Ventil 35; 37; 29 sind in Reihe geschaltet. Zusätzliche Fahrsicherheit bei großen Lasten oder Einfederungswegen bietet der Anschlagpuffer 33, der auf der Deckscheibe 31 zur Anlage kommt und einerseits eine Stützkraft bietet und andererseits im Notfall eine Anschlussöffnung 39 innerhalb der Deckscheibe 31 im Querschnitt reduziert, so dass unabhängig von der Ansteuerung des Aktuators 35 eine Dämpfkrafterhöhung erreicht wird.

### Bezugszeichenliste

- 1: Luftfeder
- 3: Abrollrohr
- 5: Rollbalg
- 7: Deckel
- 9: Federraum
- 11: Zwischenscheibe
- 13: Zusatzraum
- 15: Haltescheibe
- 17: Hohlraum
- 19: Dämpfventil
- 19s: Scheibe
- 21: Ringdichtung
- 23: Durchströmungskanäle
- 25: Ventilscheibe
- 27; 29: Luftübertritt
- 31: Deckscheibe
- 33: Anschlagpuffer
- 35: Aktuator
- 37: Ventilkörper
- 39: Anschlussöffnung

## Patentansprüche

1. Luftfeder (1) mit Dämpfungsfunktion, umfassend einen Abrollkörper (3), an dem mit einem ersten Ende ein Rollbalg (5) verbunden ist, wobei ein zweites Ende an einem Deckel (7) angeschlossen ist, so dass ein Federraum (9) gebildet wird, wobei der Federraum (9) von einer Zwischenscheibe (11) zu einem Zusatzraum (13) innerhalb des Abrollkörpers (3) unterteilt ist und in einer Zwischenscheibe (11) mindestes ein Dampfventil (19) angeordnet ist, wobei die Zwischenscheibe (11) von einem Boden des Abrollkörpers (3) gebildet wird und in der Zwischenscheibe (11) eine Fixierung für einen Dämpfventilkörper (19s) ausgeführt ist,
**dadurch gekennzeichnet,**
**dass** die Zwischenscheibe (11) eine Haltescheibe (15) aufweist, die zusammen einen Hohlraum (17) bestimmen, in dem der Dämpfventilkörper (19s) auf der Zwischenscheibe (11) verspannt wird.

2. Luftfeder nach Anspruch 1,
**dadurch gekennzeichnet,**
**dass** der Dämpfventilkörper von einer Scheibe (19s) gebildet wird, die an ihrer Ober- und Unterseite zum Hohlraum (17) innerhalb der Zwischenscheibe (1 1) abgedichtet ist.

3. Luftfeder nach Anspruch 2,
**dadurch gekennzeichnet,**
**dass** die Scheibe (19s) von einem u-förmigen Dichtungsring (21) eingefasst ist.

4. Luftfeder nach Anspruch 1,
**dadurch gekennzeichnet,**
**dass** ein Luftübertritt (27; 29) zwischen dem vom Rollbalg (5) gebildeten Federraum (9) und einem vom Abrollrohr (3) bestimmten Zusatzraum (13) von einem Aktuator (35) winkürlich beeinflusst werden kann.

5. Luftfeder nach Anspruch 4,
**dadurch gekennzeichnet,**
**dass** im Zusatzraum (13) der Aktuator (35) angeordnet ist, dessen Ventilkörper (37) mit dem Luftübertritt (29) ein verstellbarer bildet.

6. Luftfeder nach Anspruch 5,
**dadurch gekennzeichnet,**
**dass** die Haltescheibe (15) mit dem Ventilkörper (37) des Aktuators (35) das verstellbare Ventil bildet.

7. Luftfeder nach Anspruch 1,
**dadurch gekennzeichnet,**
**dass** die Zwischenscheibe (11) eine Deckscheibe (31) aufweist, die mit einem Anschlagpuffer (33) im Federraum (9) zusammenwirkt.

8. Luftfeder nach Anspruch 7,
**dadurch gekennzeichnet,**
**dass** mittels der Deckscheibe (31) der Rollbalg (5) mit dem Abrollkörper (3) verspannt ist.

## Claims

1. Pneumatic spring (1) having a damping function, comprising a rolling body (3), to which a rolling bellows (5) is connected by way of a first end, a second end being connected to a cover (7), with the result that a spring space (9) is formed, the spring space (9) being divided by an intermediate disc (11) to form an additional space (13) within the rolling body (3) and at least one damper valve (19) being arranged in an intermediate disc (11), the intermediate disc (11) being formed by a base of the rolling body (3) and a fixing means for a damper-valve body (19s) being configured in the intermediate disc (11), **characterized in that** the intermediate disc (11) has a retaining disc (15), which discs together define a hollow space (17), in which the damper-valve body (19s) is clamped on the intermediate disc (11).

2. Pneumatic spring according to Claim 1, **characterized in that** the damper-valve body is formed by a disc (19s) which is sealed on its upper and lower side with respect to the hollow space (17) within the intermediate disc (11).

3. Pneumatic spring according to Claim 2, **characterized in that** the disc (19s) is enclosed by a U-shaped sealing ring (21).

4. Pneumatic spring according to Claim 1, **characterized in that** an air transfer passage (27; 29) between the spring space (9) which is formed by the rolling bellows (5) and an additional space (13) which is defined by the rolling tube (3) can be influenced arbitrarily by an actuator (35).

5. Pneumatic spring according to Claim 4, **characterized in that** the actuator (35) is arranged in the additional space (13), the valve body (37) of which actuator (35) forms an adjustable valve with the air transfer passage (29).

6. Pneumatic spring according to Claim 5, **characterized in that** the retaining disc (15) forms the adjustable valve with the valve body (37) of the actuator (35).

7. Pneumatic spring according to Claim 1, **characterized in that** the intermediate disc (11) has a cover disc (31), which interacts with a stop buffer (33) in the spring space (9).

8. Pneumatic spring according to Claim 7, **characterized in that** the rolling bellows (5) is clamped to the rolling body (3) by way of the cover disc (31).

## Revendications

1. Amortisseur pneumatique (1) avec une fonction d'amortissement, comprenant un corps de roulement (3), auquel un soufflet roulant (5) est relié par une première extrémité, dans lequel une deuxième extrémité est raccordée à un couvercle (7), de telle manière qu'il se forme une chambre d'amortisseur (9), dans lequel la chambre d'amortisseur (9) est subdivisée par un disque intermédiaire (11) en une chambre supplémentaire (13) à l'intérieur du corps de roulement (3) et au moins une soupape d'amortissement (19) est disposée dans un disque intermédiaire (11), dans lequel le disque intermédiaire (11) est formé par un fond du corps de roulement (3) et une fixation pour un corps de soupape d'amortissement (19s) est réalisée dans le disque intermédiaire (11), **caractérisé en ce que** le disque intermédiaire (11) comporte un disque de maintien (15), qui définissent ensemble une cavité (17) dans laquelle le corps de soupape d'amortissement (19s) est tendu sur le disque intermédiaire (11).

2. Amortisseur pneumatique selon la revendication 1, **caractérisé en ce que** le corps de soupape d'amortissement est formé par un disque (19s), qui est rendu étanche sur sa face supérieure et inférieure par rapport à la cavité (17) à l'intérieur du disque intermédiaire (11).

3. Amortisseur pneumatique selon la revendication 2, **caractérisé en ce que** le disque (19s) est enchâssé dans un joint torique en forme de U (21).

4. Amortisseur pneumatique selon la revendication 1, **caractérisé en ce qu'**un passage d'air (27; 29) entre la chambre d'amortisseur (9) formée par le soufflet roulant (5) et une chambre supplémentaire (13) définie par le tube de roulement (3) peut être influencé à volonté par un actionneur (35).

5. Amortisseur pneumatique selon la revendication 4, **caractérisé en ce que** l'actionneur (35) est disposé dans la chambre supplémentaire (13), et son corps de soupape (37) forme avec le passage d'air (29) une soupape réglable.

6. Amortisseur pneumatique selon la revendication 5, **caractérisé en ce que** le disque de maintien (15) forme la soupape réglable avec le corps de soupape (37) de l'actionneur (35).

7. Amortisseur pneumatique selon la revendication 1, **caractérisé en ce que** le disque intermédiaire (11) présente un disque de recouvrement (31), qui coopère avec un tampon de butée (33) dans la chambre d'amortisseur (9).

8. Amortisseur pneumatique selon la revendication 7, **caractérisé en ce que** le soufflet roulant (5) est tendu avec le corps de roulement (3) au moyen du disque de recouvrement (31).
